# EUROPEAN PATENT APPLICATION

(11) **EP 3 981 978 A1**
(43) Date of publication of application: **13.04.2022**
(21) Application number: 20200941.1
(22) Date of filing: 09.10.2020
(51) Int. Cl.: F02M 21/02, F02B 19/10, F02B 19/12

(54) **METHOD FOR OPERATING A HYDROGEN FUELLED COMBUSTION ENGINE**

(71) Applicant: MAHLE Powertrain, LLC, Plymouth MI 48170 (US)
(72) Inventor: Bunce, Michael, Plymouth, Michigan 48170 (US); Peters, Nathan, Whitmore Lake, Michigan 48189 (US)
(74) Representative: Gleim, Christian Ragnar

(57) **Abstract**

Method for operating a hydrogen fuelled combustion engine 1 comprising the steps of:
- providing an internal combustion engine 1 having at least one cylinder 2 and a piston 3 supported at a crankshaft 5 for repeated reciprocal movement in the cylinder 2 so as to define a main combustion chamber 21, the internal combustion engine 1 further having an ignition device 4 arranged in said cylinder 2 with an igniter portion 42 and a hydrogen fuel injector 43 which are both arranged at a pre-chamber 41, wherein the pre-chamber 41 has a plurality of orifices 44 for providing fluid communication between said pre-chamber 41 and the main combustion chamber 21; and
- operating the engine in cycles comprising the following steps:
- introducing hydrogen fuel in the pre-chamber 41;
- introducing hydrogen fuel in the main combustion chamber 21; and
- igniting the introduced hydrogen fuel in the pre-chamber 41 for combusting the introduced hydrogen fuel in the main combustion chamber 21.

## Description

The present invention relates to a method for operating an internal combustion engine using hydrogen fuel and to a hydrogen fuelled internal combustion engine according to the independent claim.

The invention lies in the technical field of internal combustion engines using hydrogen fuel and having a pre-chamber for the ignition of the combustion chamber by use of turbulent jet ignition.

Internal combustion engines using hydrogen fuel contribute to climate change mitigation, since hydrogen is a substitute for fossil fuels such as gasoline or diesel. In particular, a largely CO₂ neutral supply of hydrogen can be achieved by using hydrogen produced in hydrolysis processes using renewable energies. In addition, the emission of CO₂ is avoided in hydrogen combustion engines.

However, the unique fuel properties of hydrogen such as low minimum ignition energy, wide flammability limits, and simple low-temperature kinetics make it prone to abnormal combustion. One form of abnormal combustion is knock, which refers to an uncontrolled combustion of fuel in engines caused by undesired auto-ignition. This is accompanied by pressure peaks, which can damage pistons, bearings, cylinder head, valves, etc. Consequently, forms of abnormal combustion need to be prevented.

For conventional fuels, such as gasoline, a method of controlling knock is by reducing the combustion duration. This reduces the residence time that the unburned fuel/air mixture ahead of the flame experiences at high temperature, thereby reducing its likelihood to auto-ignite prior to normal consumption by the initiated flame.

However, with hydrogen fuel abnormal combustion occurs very quickly once the hydrogen fuel reaches a certain temperature threshold. Unlike more complex hydrocarbons, hydrogen's low-temperature kinetics are such that it has minimal sensitivity to the residence time of the unburned air/hydrogen fuel mixture, meaning that combustion duration reduction is significantly less effective as a mechanism for knock mitigation.

There are therefore two effective methods for reducing abnormal combustion with hydrogen fuel. The first is to reduce bulk in-cylinder temperature. The second is to alter the air/hydrogen fuel mixture's composition in order to increase the temperature threshold at which successful ignition of hydrogen will occur.

The fuel-agnostic mass ratio of air to fuel (air-fuel ratio / stoichiometric air-fuel ratio) present in a combustion chamber, commonly denoted as lambda (λ), indicates the mass ratio of air to fuel relative to the respective stoichiometrically ideal ratio for a theoretically complete combustion process. The ratio becomes stoichiometric when just enough air is provided to combust the fuel completely. This defines λ = 1. A lower air/fuel ratio (λ < 1) is called "rich", whereas a higher air/fuel ratio (λ > 1) is called "lean". The present invention distinguishes between the λ in the pre-chamber and in the main combustion chamber. Conventionally λ being far from 1 results in a poor ignition quality of the mixture and ultimately to λ limit values, which, if they are violated, lead to a poor combustion performance.

Turbulent jet ignition enables the engine to operate within wider λ limit values compared to spark ignited engines where ignition is achieved only via traditional spark plugs. A prior art internal combustion engine for fossil fuel employing an ignition system for turbulent jet ignition is disclosed in US 2012 103 302 A1. The internal combustion engine has an engine block with cylinders. Each cylinder has a cylinder head bordering a main combustion chamber in which the main air fuel charge is ignited. A piston is arranged bordering the combustion chamber, which is connected via a rod at a crankshaft to allow a reciprocal movement. Each cylinder roof defines an intake opening and an exhaust opening. The intake and exhaust openings are opened and closed via cam driven valves to provide fluid communication between the cylinder and an intake manifold and an exhaust manifold.

The internal combustion engine also includes a fuel injector mounted in the intake manifold as a means of introducing the main fuel/air charge into the combustion chamber through the intake port. The ignition device has an igniter portion and an injector arranged to face an inner pre-chamber volume.

The pre-chamber is shaped to form a nozzle having a plurality of orifices disposed spaced from one another and providing fluid communication between the pre-chamber and the combustion chamber. The igniter portion ignites the fuel in the pre-chamber. The orifice diameter is kept small to promote flame quenching as the combustion products exit out of the pre-chamber into the main combustion chamber. Flame quenching means that the partially combusted pre-chamber products are forced through the small orifices of the pre-chamber. The combustion products are extinguished, but disperse through the main combustion chamber, then react with the main fuel charge and initiate combustion in the main combustion chamber at multiple locations through chemical, thermal and turbulent effects at some distance from the pre-chamber nozzle.

An improved ignition device capable of creating a more efficient reactive jet is disclosed in US 2015 006 848 9 A1. The pre-chamber of this ignition device includes a plurality of orifices of an advantageous design (i.e. diameter size) to provide a fluid communication between the pre-chamber volume and the main chamber volume.

In the case of the jet igniter, electrical energy from the spark plug is used to convert the small amount of the fuel/air mixture in the pre-chamber into chemical energy via the pre-chamber combustion. The resulting pressure increase in the pre-chamber causes this chemical energy to be rapidly transferred to the main combustion chamber in the form of jets which are formed when the contents flow through the nozzle openings of the pre-chamber. Since turbulent jet ignition (TJI) is a high-energy ignition source, the above mentioned techniques allow the use of low ignition quality mixtures characterized by an ultra lean air-fuel ratio.

It is an object of the present invention to provide a method for operating an internal combustion engine using hydrogen fuel being ignited by turbulent jet ignition to improve combustion and mitigate abnormal combustion and further to provide an hydrogen fuelled internal combustion engine.

This object is achieved by a method for operating a hydrogen fuelled combustion engine comprising the steps of:
- providing an internal combustion engine having at least one cylinder and a piston supported at a crankshaft for repeated reciprocal movement in the cylinder so as to define a combustion chamber. The internal combustion engine has an ignition device arranged in said cylinder with an igniter portion and a hydrogen fuel injector which are both arranged at a pre-chamber. The pre-chamber has a plurality of orifices for providing fluid communication between said pre-chamber and the combustion chamber.
- operating the engine in cycles comprising the following steps:
   - introducing hydrogen fuel in the pre-chamber;
   - introducing hydrogen fuel in the main combustion chamber; and
   - igniting the injected hydrogen fuel in the pre-chamber for combusting the introduced hydrogen fuel in the main combustion chamber.

Hydrogen fuel refers to hydrogen fuel blends containing more than 50% hydrogen by volume. The use of an (actively hydrogen fuelled) pre-chamber combustor (active jet ignition) decouples the λ in the pre-chamber from the λ in the main combustion chamber. This allows tuning λ in the pre-chamber for an optimal spark event to occur in the pre-chamber, the highly reactive products of which subsequently initiate the second combustion event in the main combustion chamber. The λ in the main combustion chamber can be tuned independently from the λ in the pre-chamber in such a way that both abnormal combustion in the pre-chamber and in the main combustion chamber are mitigated.

Specifically, the step of introducing hydrogen fuel in the pre-chamber is conducted after the step of introducing hydrogen fuel in the main combustion chamber. This allows for separately controlling the air/hydrogen fuel mixture (and λ) in the pre-chamber and the main combustion chamber.

Alternatively, the step of introducing hydrogen fuel in the pre-chamber and the step of introducing hydrogen fuel in the main combustion chamber are conducted at least partially overlapping. This allows improved simultaneous controlling of the air/hydrogen fuel mixture in the main combustion chamber and the pre-chamber.

It is particularly preferred, when the step of introducing hydrogen fuel in the pre-chamber comprises that a portion of the hydrogen fuel introduced into the main combustion chamber enters the pre-chamber.

According to a preferred aspect, the step of introducing hydrogen fuel in the pre-chamber comprises that a portion of the hydrogen fuel introduced into the main combustion chamber enters the pre-chamber during a compression stroke of the piston in the cylinder.

According to another preferred aspect, the step of introducing hydrogen fuel in the pre-chamber comprises that a portion of the hydrogen fuel introduced into the main combustion chamber enters the pre-chamber partially during an intake stroke of the piston in the cylinder.

Advantageously, the step of introducing hydrogen fuel in the pre-chamber comprises that hydrogen fuel is injected into the pre-chamber by the hydrogen fuel injector. This allows to reduce the air/hydrogen fuel ratio λ in the pre-chamber and to compensate for a lean lambda of the hydrogen fuel entering the pre-chamber from the main combustion chamber.

According to an advantageous aspect, the step of introducing hydrogen fuel in the pre-chamber comprises multiple injections of hydrogen fuel via the fuel injector in the pre-chamber. This allows for adding more hydrogen fuel and, hence, to provide a rich mixture to be ignited in the pre-chamber which improves flammability of the hydrogen fuel-air mixture.

A particularly preferred aspect relates to the amount of injected hydrogen fuel in the pre-chamber being chosen so that the air/hydrogen fuel ratio λ inside the pre-chamber is within the range 0.25 ≤ λ ≤ 0.4 at the time of igniting the injected hydrogen fuel in the pre-chamber. This range of λ is selected to reduce the combustion temperatures within the pre-chamber to mitigate abnormal combustion (e.g. pre-ignition, knock) in the pre-chamber. Furthermore, this range of λ is selected for optimal pre-chamber combustion duration to mitigate abnormal combustion (e.g. pre-ignition, knock) in pre-chamber and in the main chamber.

According to another preferred aspect the amount of injected hydrogen fuel in the pre-chamber is chosen so that the air/hydrogen fuel ratio λ inside the pre-chamber is within the range 1.4 ≤ λ ≤ 2.5 at the time of igniting the injected hydrogen fuel in the pre-chamber. This range of λ is selected to reduce the combustion temperatures within the pre-chamber to mitigate abnormal combustion (e.g. pre-ignition, knock) in the pre-chamber. Furthermore, this range of λ is selected for optimal pre-chamber combustion duration to mitigate abnormal combustion (e.g. pre-ignition, knock) in the pre-chamber and the main chamber.

It is particularly preferred that the injection of hydrogen fuel in the pre-chamber is carried out so that the air/hydrogen fuel ratio λ inside the pre-chamber is maintained at 1.4 ≤ λ during the steps of injecting hydrogen fuel in the pre-chamber until igniting the injected hydrogen fuel in the pre-chamber. This applies in conjunction with achieving a range of 1.4 ≤ λ ≤ 2.5 at the time of igniting the injected hydrogen fuel in the pre-chamber. This allows to reduce the likelihood of abnormal combustion (e.g. pre-ignition, knock) to occur in the pre-chamber.

The advantages of the invention are described in the following in connection to the drawings. In the following:
Fig. 1 is a vertical cross-section of an internal combustion engine using hydrogen fuel having an ignition device for turbulent jet ignition;
Fig. 2 is a block diagram describing the steps of a method for operating an internal combustion engine using hydrogen fuel;
Fig. 3 is a plot that shows the pre-chamber combustion duration versus pre-chamber lambda at time of ignition (spark timing);
Fig. 4 is a plot that shows the early burn duration in the main combustion chamber versus pre-chamber combustion duration;
Fig. 5 is a plot that shows simulated peak combustion temperature of contents interior to the pre-chamber versus pre-chamber lambda at time of ignition (spark timing).
Fig. 6 is a plot that shows the constant-volume adiabatic flame temperature and the flame speed versus lambda A.

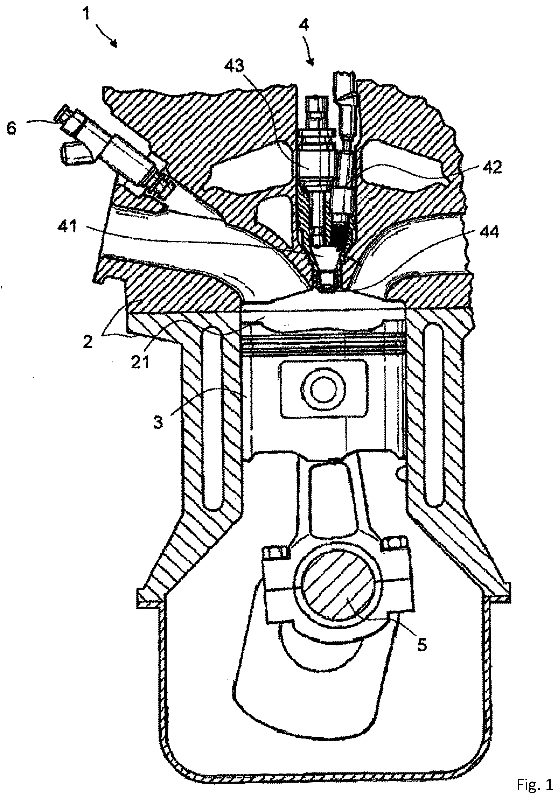

In **Fig. 1**, an example for internal combustion engine 1 using hydrogen fuel is given which shows in the present illustration one cylinder 2 and a piston 3 supported at a crankshaft 5 for repeated reciprocal movement in the cylinder 2. Cylinder 2 and piston 3 define a main combustion chamber 21. The internal combustion engine 1 has an ignition device 4 arranged to face the combustion chamber 21. The ignition device 4 has an igniter portion 42 and a hydrogen fuel injector 43 which are both arranged at a pre-chamber 41 so as to form a part of the inner volume of the pre-chamber 41. The pre-chamber 41 has a plurality of orifices 44 for providing fluid communication between the inner volume of pre-chamber 41 and the inner volume of main combustion chamber 21.

According to the invention, the hydrogen fuel is introduced in main combustion chamber 21. Subsequently, hydrogen fuel is introduced in the pre-chamber 41 in such a way that hydrogen fuel enters the pre-chamber 41 from the main combustion chamber 21 during a compression stroke of the piston 3 in the cylinder 2. More hydrogen fuel is introduced in the pre-chamber 41 by injecting hydrogen fuel into the pre-chamber 41 by the hydrogen fuel injector 43. The introduced hydrogen fuel is ignited in the pre-chamber 41 via the igniter portion 42. The resulting pressure increase in the pre-chamber 41 causes this chemical energy to be rapidly transferred to the main combustion chamber 21 in the form of jets, which are formed when the contents flow through the orifices 44 to the main combustion chamber 21 for combusting the introduced hydrogen fuel in the main combustion chamber 21.

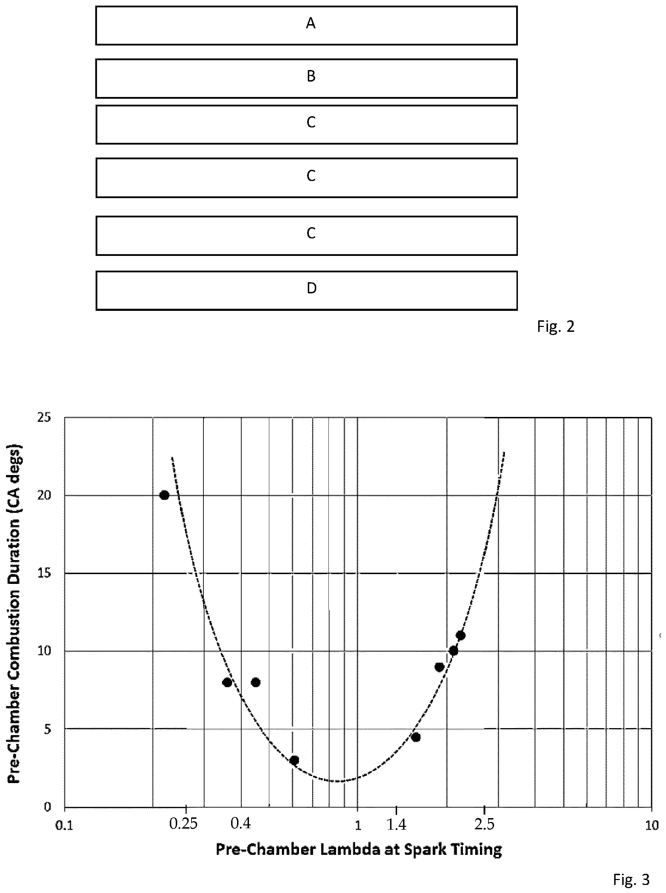

The method for operating a hydrogen fuelled combustion engine (as shown in Fig. 1) is illustrated by the block diagram of **Fig. 2****.** The reference numbers of Fig. 1 and Fig. 2 correspond to each other so that in the following the reference numbers shown in Fig. 1 are used for the description of Fig. 2.

Step A relates to introducing hydrogen fuel in the main combustion chamber 21.

In step B hydrogen fuel is introduced in the pre-chamber 41 in such a way that hydrogen fuel enters the pre-chamber 41 from the main combustion chamber 21 during a compression stroke of the piston 3 in the cylinder 2.

In step C hydrogen fuel is injected into the pre-chamber 41 via the hydrogen fuel injector 43. This allows to reduce the air/hydrogen fuel ratio λ in the pre-chamber 41 and to compensate for a lean lambda of the hydrogen fuel entering the pre-chamber 41 from the main combustion chamber 21. The present example comprises multiple injections (Step C, Step C, Step C,...) of hydrogen fuel via the hydrogen fuel injector 43 in the pre-chamber 41. The provided air/hydrogen fuel mixture in the pre-chamber 41 will become richer after every injection which improves flammability of the hydrogen fuel-air mixture.

The introduced hydrogen fuel is ignited in the pre-chamber 41 via the igniter portion 42 in step D. By the resulting pressure increase in the pre-chamber 41 chemical energy is rapidly transferred to the main combustion chamber 21 in the form of jets, which are formed when the contents flow through the orifices 44 to the main combustion chamber 21 for combusting the introduced hydrogen fuel in the main combustion chamber 21.

**Fig. 3** is a plot that shows the pre-chamber combustion duration versus pre-chamber lambda at the time of igniting the injected hydrogen fuel in the pre-chamber, i.e. at spark timing. For optimal combustion performance the amount of injected hydrogen fuel in the pre-chamber is chosen so that the normalized air/hydrogen fuel ratio λ inside the pre-chamber is within the range 0.25 ≤ λ ≤ 0.4 or within the range 1.4 ≤ λ ≤ 2.5 at the time of igniting the injected hydrogen fuel in the pre-chamber, i.e. at spark timing. Furthermore, these ranges of λ are selected for optimal pre-chamber combustion duration to mitigate abnormal combustion (e.g. pre-ignition, knock). Outside these regions overly slow pre-chamber combustion leads to a high likelihood of poor engine performance, e.g. because of unacceptable combustion instability or misfires in either the pre-chamber or main chamber, or excessively fast pre-chamber combustion leads to abnormal combustion in the pre-chamber, e.g. knocking.

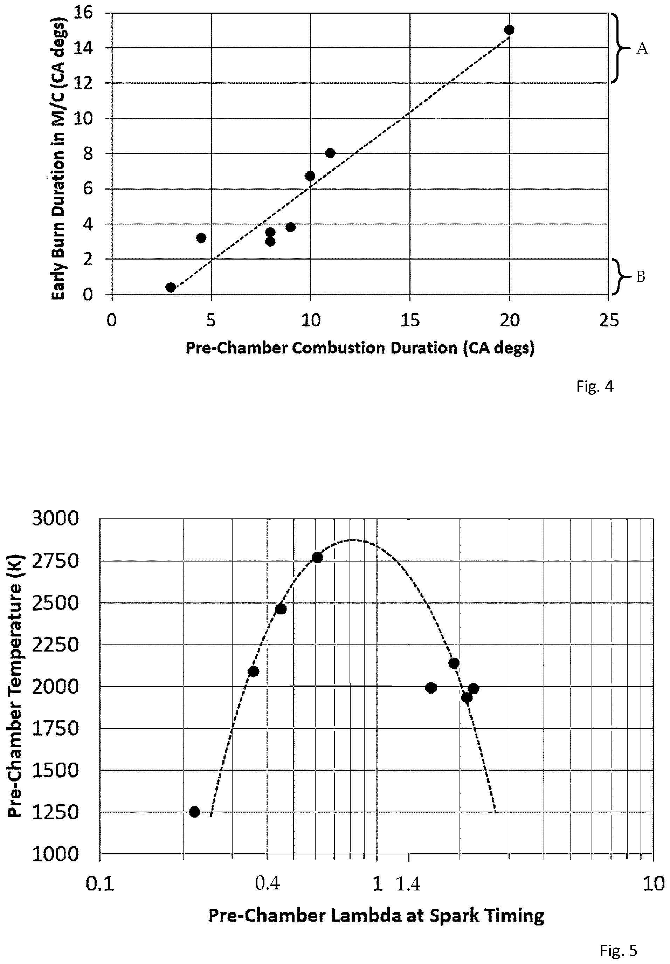

**Fig. 4** is a plot that shows the early burn duration in the main combustion chamber (duration in crank angle degrees of the time it takes the main chamber to consume from 0% to 10% of the fuel mass present) versus pre-chamber combustion duration. Region A identifies the area where overly slow pre-chamber combustion produces overly slow early combustion in the main chamber, leading to a high likelihood of poor engine performance, e.g. unacceptable combustion instability or misfires in the pre-chamber or main chamber. Region B identifies the area where an excessively fast pre-chamber combustion event can lead to abnormal combustion in the pre-chamber, e.g. knocking.

**Fig. 5** is a plot that shows simulated peak combustion temperature of contents interior to the pre-chamber versus pre-chamber lambda λ at the time of igniting the injected hydrogen fuel in the pre-chamber, i.e. at spark timing. High combustion temperatures within the range 0.4 ≤ λ ≤ 1.4 increase the likelihood of abnormal combustion, e.g. pre-ignition or knock, occurring in subsequent engine cycles.

For optimal combustion performance the amount of injected hydrogen fuel in the pre-chamber is chosen so that the normalized air/hydrogen fuel ratio λ inside the pre-chamber is within the range 0.25 ≤ λ ≤ 0.4 or within the range 1.4 ≤ λ ≤ 2.5 at the time of igniting the injected hydrogen fuel in the pre-chamber, i.e. at spark timing. Both ranges of λ are selected to reduce the combustion temperatures within the pre-chamber to an extent to mitigate abnormal combustion, e.g. pre-ignition or knock.

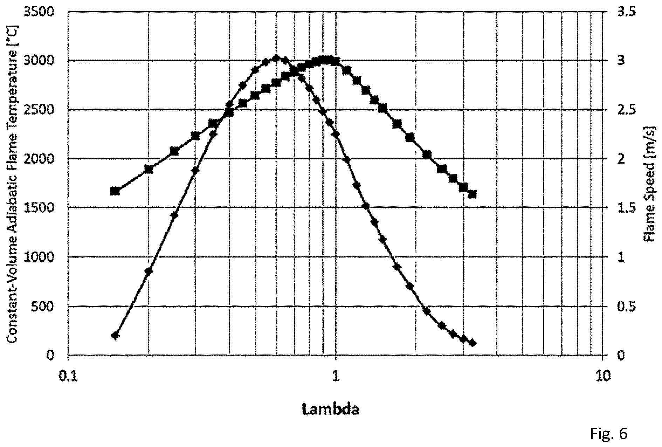

**Fig. 6** is a plot that shows the constant-volume adiabatic flame temperature and the flame speed versus lambda λ. The plot serves to indicate a general relationship of hydrogen fuel properties to lambda, applicable for example to optimize the normalized air/hydrogen fuel ratio λ inside the pre-chamber at the time of igniting the injected hydrogen fuel in the pre-chamber, i.e. at spark timing.

For optimal combustion performance the amount of injected hydrogen fuel in the pre-chamber is chosen so that the normalized air/hydrogen fuel ratio λ inside the pre-chamber is within the range 0.25 ≤ λ ≤ 0.4 or within the range 1.4 ≤ λ ≤ 2.5 at the time of igniting the injected hydrogen fuel in the pre-chamber, i.e. at spark timing, in order to take into account both the constant-volume adiabatic flame temperature and the flame speed which influence the combustion behaviour. For example, under lean conditions, the high flame temperature at λ = 1.4 is somewhat balanced out by slower chemical reactions, followed by low flame speed, which leads to lower peak combustion pressure in the pre-chamber.

For this reason, the optimal λ range for good pre-chamber and subsequent main chamber combustion do not need to be symmetric about λ = 1, but instead are shifted to richer values.

## Claims

1. Method for operating a hydrogen fuelled combustion engine (1) comprising the steps of:
- providing an internal combustion engine (1) having at least one cylinder (2) and a piston (3) supported at a crankshaft (5) for repeated reciprocal movement in the cylinder (2) so as to define a main combustion chamber (21), the internal combustion engine (1) further having an ignition device (4) arranged in said cylinder (2) with an igniter portion (42) and a hydrogen fuel injector (43) which are both arranged at a pre-chamber (41), wherein the pre-chamber (41) has a plurality of orifices (44) for providing fluid communication between said pre-chamber (41) and the main combustion chamber (21); and
- operating the engine in cycles comprising the following steps:
- introducing hydrogen fuel in the pre-chamber (41);
- introducing hydrogen fuel in the main combustion chamber (21); and
- igniting the introduced hydrogen fuel in the pre-chamber (41) for combusting the introduced hydrogen fuel in the main combustion chamber (21).

2. Method according to claim 1, wherein the step of introducing hydrogen fuel in the pre-chamber (41) is conducted after the step of introducing hydrogen fuel in the main combustion chamber (21).

3. Method according to claim 1, wherein the step of introducing hydrogen fuel in the pre-chamber (41) and the step of introducing hydrogen fuel in the main combustion chamber (21) are conducted at least partially overlapping.

4. Method according to any one of the preceding claims, wherein the step of introducing hydrogen fuel in the pre-chamber (41) comprises that a portion of the hydrogen fuel introduced into the main combustion chamber (21) enters the pre-chamber (41).

5. Method according to claim 4, wherein the step of introducing hydrogen fuel in the pre-chamber (41) comprises that a portion of the hydrogen fuel introduced into the main combustion chamber (21) enters the pre-chamber (41) during a compression stroke of the piston (3) in the cylinder (2).

6. Method according to any one of claims 4, wherein the step of introducing hydrogen fuel in the pre-chamber (41) comprises that a portion of the hydrogen fuel introduced into the main combustion chamber (21) enters the pre-chamber (41) partially during an intake stroke of the piston (3) in the cylinder (2).

7. Method according to any one of the preceding claims, wherein the step of introducing hydrogen fuel in the pre-chamber (41) comprises that hydrogen fuel is injected into the pre-chamber (41) by the hydrogen fuel injector (43).

8. Method according to claim 7, wherein the step of introducing hydrogen fuel in the pre-chamber (41) comprises multiple injections of hydrogen fuel via the fuel injector (43) in the pre-chamber (41).

9. Method according to any one of the preceding claims, wherein the amount of introduced hydrogen fuel in the pre-chamber (41) is chosen so that the air/hydrogen fuel ratio λ inside the pre-chamber (41) is within the range 0.25 ≤ λ ≤ 0.4 at the time of igniting the injected hydrogen fuel in the pre-chamber (41).

10. Method according to any one of claims 1 to 8, wherein the amount of introduced hydrogen fuel in the pre-chamber (41) is chosen so that the air/hydrogen fuel ratio λ inside the pre-chamber (41) is within the range 1.4 ≤ λ ≤ 2.5 at the time of igniting the injected hydrogen fuel in the pre-chamber (41).

11. Method according to claim 10, wherein the step of introducing hydrogen fuel in the pre-chamber (41) is carried out so that the air/hydrogen fuel ratio λ inside the pre-chamber (41) is maintained at 1.4 ≤ λ during the steps of introducing hydrogen fuel in the pre-chamber (41) until igniting the introduced hydrogen fuel in the pre-chamber (41).

12. Hydrogen fuelled internal combustion engine (1) comprising at least one cylinder (2) and a piston (3) supported at a crankshaft (5) for repeated reciprocal movement in the cylinder (2) so as to define a main combustion chamber (21), the internal combustion engine (1) further having an ignition device (4) arranged in said cylinder (2) with an igniter portion (42) and a hydrogen fuel injector (43) which are both arranged at a pre-chamber (41), wherein the pre-chamber (41) has a plurality of orifices (44) for providing fluid communication between said pre-chamber (41) and the main combustion chamber (21), and the hydrogen fuelled internal combustion engine (1) being operated by the method according to any one of the preceding claims.
